# EUROPÄISCHE PATENTSCHRIFT

(11) **EP 2 697 518 B1**
(45) Veröffentlichungstag und Bekanntmachung des Hinweises auf die Patenterteilung: **28.09.2016**
(21) Anmeldenummer: 12722274.3
(22) Anmeldetag: 21.03.2012
(51) Int. Cl.: F16B 2/16, B42F 9/00, G09F 1/10

(54) **HALTEVORRICHTUNG FÜR ZETTEL ODER DERGLEICHEN**
HOLDING DEVICE FOR NOTES OR THE LIKE
DISPOSITIF DE FIXATION POUR FICHES OU AUTRES

(30) Priorität: 12.04.2011 CZ 20110210
(43) Veröffentlichungstag der Anmeldung: 19.02.2014
(73) Patentinhaber: Skoda Auto A.S., 293 60 Mladá Boleslav (CZ)
(72) Erfinder: KUTIL, Jaroslav, 294 71 Benatky nad Jizerou (CZ)
(86) Internationale Anmeldenummer: PCT/CZ2012/000026
(87) Internationale Veröffentlichungsnummer: WO 2012/139534

(56) Entgegenhaltungen:
- WO-A1-02/38391
- WO-A1-93/16289
- AU-B3- 513 133
- CH-A5- 670 367
- DE-A1- 3 835 937
- DE-U1- 9 405 788
- FR-A- 1 423 252
- GB-A- 1 025 811
- US-A- 5 592 721
- US-B1- 6 182 936

## Beschreibung

### Technisches Gebiet

Die Erfindung betrifft einen Halter an der Schalttafel des Fahrzeuges, der zum Platzieren von Bildern oder Zettel und Papierblätter mit Nachrichten, Notizen, Aufgaben sowie Plastikfolien und ähnliches in der Augen- und Handreichweite des Fahrers oder Beifahrers dient.

### Bisheriger Stand der Technik

In der Praxis ist aus dem Stand der Technik eine Lösung im Prinzip für ähnliche Zwecke in Form eines Parkscheinclips bekannt. Der Clip ist meistens innen an der A-Säule hinter der Frontscheibe befestigt, damit der Parkschein von außen des Fahrzeuges sichtbar ist.

Nachteilig ist, dass der so gestaltete Clip nach dem Prinzip der Rückfederung des Materials, in diesem Fall eines Kunststoffs, funktioniert, was mit der Zeit eine Ermüdung des Materials und dadurch eine unzureichende Funktionalität des Clips zur Folge hat. Ist der Clip direkt an der Schalttafel angeordnet, wirkt er wieder designmäßig störend.

Aus dem Stand der Technik ist auch das Dokument WO 02/38391 A1 bekannt. Es offenbart einen Halter der aus einem Clip und einem Zylinder besteht. Weiterhin offenbart das Dokument einen Halter, bei dem der Zylinder in dem nach unten verengten U-Profil des Clips angeordnet ist, Ein Zettel oder Bild kann in dem Halter zwischen der Wand des U-Profils des Clips und dem Zylinder nach dem Prinzip des selbstklemmenden Winkels festgehalten werden. Nachteilig ist, daß für eine Nutzung solches Halters an der Schalttafel des Fahrzeuges eine Betätigungseinrichtung, die funktions- und designmäßig in einem Fahrzeug geeignet ist, fehlt.

### Darstellung der Erfindung

Die obengenannten Nachteile werden durch die Merkmale des Anspruchs 1 beseitigt. Der Halter funktioniert nicht nach dem Prinzip der Rückfederung des Materials, sondern nach dem Prinzip des selbstklemmenden Winkels und der Gravitation. Er kann komplett in der Innenkonstruktion zum Beispiel der Schalttafel untergebracht werden. Die Papierzettel mit Notizen oder Bilder können durch die Spalte zwischen den Teilen eingelegt werden. Es handelt sich um einfaches Prinzip des selbstklemmenden Winkels des Halters, in dem ein Stahlzylinder angeordnet ist, der durch eigene Gravitation den Papierzettel oder das Bild festhält.

### Bilderübersicht

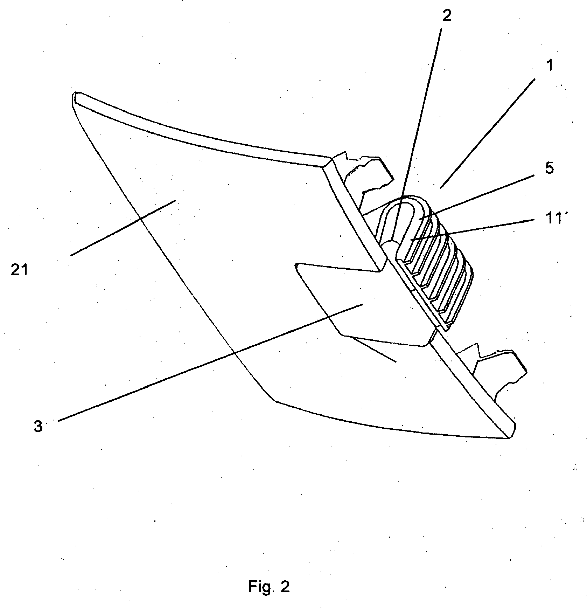

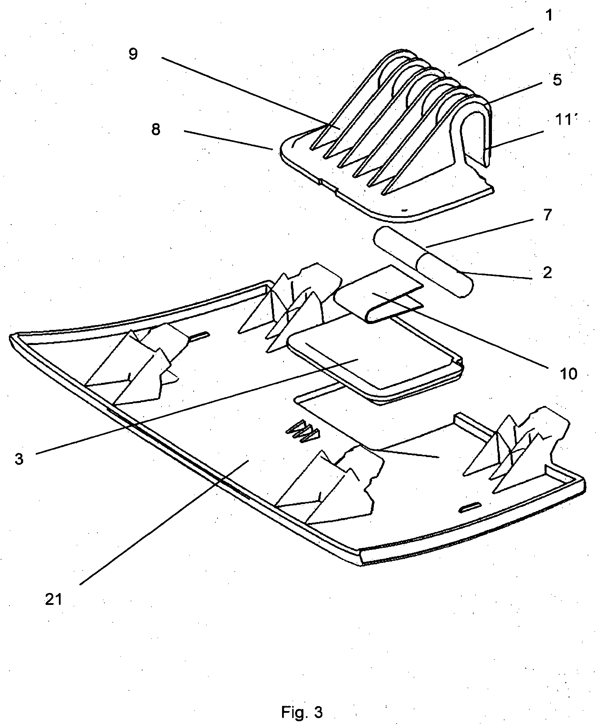

Die Erfindung wird anhand schematischer Abbildungen näher erläutert, wobei die Fig. 1 den Schnitt der gesamten Baugruppe - d.h. im Längsschnitt das Detail des eigentlichen Halters, bestehend aus einem Clip, einem Zylinder, einer Taste und einer Metallfeder, die Fig. 2 die Unteransicht des in die Mittelkonsole eingesetzten Halters und die Fig. 3 die einzelnen Bauteile des Halters darstellt.

### Ausführungsbeispiele der Erfindung

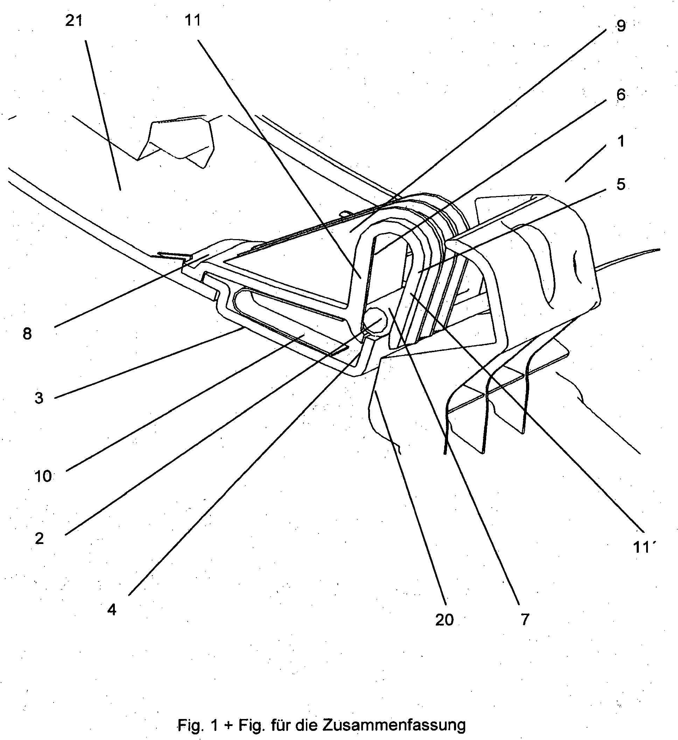

Der Fig. 1 ist zu entnehmen, dass der Halter in die Mittelkonsole 20 und deren Deckel 21, die Bestandteile der Schalttafel sind, integriert werden kann.

Die Grundbestandteile des Halters sind der Clip 1 und der Zylinder 2. Für höheren Komfort kann der Halter auch eine Taste 3 und eine Feder 10 umfassen. Umfasst der Halter nur den Clip 1 und den Zylinder 2, wird er auch funktionieren, nur muss für das Ausziehen des festgehaltenen Zettels oder Bildes aus dem Halter höhere Kraft aufgebracht werden.

Einer der Bestandteile des Clips 1 ist das U-Profil 5, das mit seinem offenen Abschnitt im Wesentlichen nach unten verschwenkt ist und an die Mittelkonsole 20 anliegt. Weitere Bestandteile des Clips 1 sind der Schenkel 8 und die Verrippung 9. Das U-Profil 5 schließt mit dem Schenkel 8 im Wesentlichen einen rechten Winkel ein, wobei die Verbindung des U-Profils 5 mit dem Schenkel 8 durch die Verrippung 9 versteift ist.

Der Zylinder 2 ist in dem sich nach unten verengenden U-Profil 5 des Clips 1 angeordnet. In der Ruhestellung befindet sich der Zylinder 2 im unteren Abschnitt des U-Profils 5, sodass er beide Wände 11, 11' berührt.

Der Zettel oder das Bild werden in den Halter zwischen den Zylinder 2 und die Wand 11' des U-Profils 5 eingeschoben. Der Zettel oder das Bild werden im Halter mit ihrem Oberteil zwischen der Wand 11' des U-Profils 5 des Clips 1 und dem Zylinder 2 auf dem Prinzip des selbstklemmenden Winkels festgehalten.

Das U-Profil 5 des Clips 1 weist eine Führungsrippe 6 auf, wobei der Zylinder 2 in der Mitte verengt ist. Die Rippe 6 inmitten des U-Profils 5 des Clips 1 sichert den Zylinder 2 gegen seitliches Herausfallen sowie beim Handling z.B. beim Einbau.

Die Taste 3 ist an einem Ende an den Deckel 21 der Mittelkonsole 20 befestigt und das andere gebogene Ende 4 befindet sich in unmittelbarer Nähe des Zylinders 2. Es kann ihn auch berühren. Für eine perfekte Funktionalität des Festhaltens des Zettels oder des Bildes muss in der Ruhestellung zwischen dem gebogenen Ende 4 der Taste 3 und dem Zylinder 2 ein Spielraum sichergestellt werden.

Beim Drücken der Taste 3 wird der Zylinder 2 angehoben, dadurch erweitert sich die Spalte zwischen dem Zylinder 2 und der Wand 11' des U-Profils 5 und der Zettel oder das Bild kann herausgenommen werden.

Die Metallfeder 10 in V-Form lehnt sich einerseits an den Schenkel 8 des Clips 1 und anderseits an die Taste 3 an, wobei die Feder 10 die Taste 3 im vorgespannten Zustand hält.

### Bezugszeichenliste

1 - Clip
2 - Zylinder
3 - Taste
4 - verbogener Ende der Taste
5 - U-Profil
6 - Führungsrippe
7 - Verengung des Zylinders
8 - schenkel
9 - Verrippung
10 - Metallfeder
11, 11' - die Wände des U-Profils
20 - Mittelkonsole
21 - Deckel der Mittelkonsole

## Patentansprüche

1. Schalttafel mit einem Halter, der in die Mittelkonsole (20) und deren Deckel (21), die Bestandteile der Schalttafel eines Fahrzeuges sind, integriert ist, bestehend aus einem Clip (1) und einem Zylinder (2), wobei der in der Mitte verengte Zylinder (2) in dem nach unten verengten zum Deckel (21) angebrachten U-Profil (5) mit einer Führungsrippe (6) des Clips (1) angeordnet ist, wobei das U-Profil (5) an die Mittelkonsole 20 anliegt, wobei eine Taste (3) an einem Ende an den Deckel (21) der Mittelkonsole (20) befestigt ist und ein andere gebogene Ende (4) der Taste (3) sich derart in unmittelbarer Nähe unter dem Zylinder (2) befindet, dass beim Drücken der Taste (3) der Zylinder (2) anhebbar ist.

2. Schalttafel mit einem Halter nach Anspruch 1, **dadurch gekennzeichnet, dass** eine Feder (10) in V-Form sich einerseits an einen Schenkel (8) des Clips (1) und anderseits an die Taste (3) anlehnt, wobei die Feder (10) die Taste (3) im vorgespannten Zustand hält.

3. Schalttafel mit einem Halter nach vorherigen Ansprüchen, **dadurch gekennzeichnet, dass** sich der Zylinder (2) in der Ruhestellung im unteren Abschnitt des U-Profils (5) befindet, sodass er beide Wände (11, 11') des U-Profils (5) berührt, wobei ein Zettel oder Bild in dem Halter zwischen der Wand (11') des U-Profils (5) des Clips (1) und dem Zylinder (2) nach dem Prinzip des selbstklemmenden Winkels festgehalten werden kann.

## Claims

1. Control panel with a holder which is integrated in the center console (20) and its cover (21) as the components of the control panel of a vehicle, is composed of a clip (1) and a cylinder (2), wherein the U-profile (5) mounted in the cylinder (2) narrowed in the middle and narrowed downwards to the cover (21), is arranged with a guide rib (6) of the clip (1), wherein the U-profile (5) rests on the center console 20, wherein a button (3) is fixed to the cover (21) of the center console (20) at one end, and another curved end (4) of the button (3) is located in the immediate vicinity below the cylinder (2) in such a way, that on pressing the button (3), the cylinder (2) may be raised.

2. Control panel with a holder according to claim 1,
**characterized in that**
a V-shaped spring (10) leans on one side on a limb (8) of the clip (1) and on the other side on the button (3), wherein the spring (10) holds the button (3) in the preload state.

3. Control panel with a holder according to the previous claims,
**characterized in that**
the cylinder (2) in the rest position is located in the lower section of the U-profile (5) so that it touches both walls (11, 11') of the U-profile (5), wherein a note or image may be fixed in the holder between the wall (11') of the U-profile (5) of the clip (1) and the cylinder (2) on the principle of a self-clamping angle.

## Revendications

1. Tableau de bord comportant un support, qui est intégré dans la console centrale (20) et son couvercle (21), qui sont des constituants du tableau de bord d'un véhicule, consistant en une attache (1) et un cylindre (2), le cylindre (2), rétréci en son milieu, étant disposé dans le profil en U, rétréci vers le bas et rapporté au couvercle (21), comportant une nervure de guidage (6) de l'attache (1), le profil en U (5) étant disposé contre la console centrale (20), une touche (3) étant fixée à une extrémité du couvercle (21) de la console centrale (20), et une autre extrémité incurvée (4) de la touche (3) se trouvant au voisinage immédiat du cylindre (2) en-dessous de ce dernier de telle sorte que le cylindre (2) puisse être levé lors de l'enfoncement de la touche (3).

2. Tableau de bord comportant un supportant selon la revendication 1, **caractérisé en ce qu'**un ressort (10) en forme de V s'appuie d'une part contre une branche (8) de l'attache (1) et d'autre part contre la touche (3), le ressort (10) maintenant la touche (3) à l'état précontraint.

3. Tableau de bord comportant un support selon les revendications précédentes, **caractérisé en ce que** le cylindre (2) se trouve en position de repos, dans le segment inférieur du profil en U (5), de façon à entrer en contact avec les deux parois (11, 11') du profil en U (5), une étiquette ou une image pouvant être maintenue dans le support entre la paroi (11') du profil en U (5) de l'attache (1) et le cylindre (2) selon le principe de l'angle autobloquant.
